# EUROPEAN PATENT SPECIFICATION

(11) **EP 0 622 304 B1**
(45) Date of publication and mention of the grant of the patent: **03.09.1997**
(21) Application number: 94106650.8
(22) Date of filing: 28.04.1994
(51) Int. Cl.: B65D 23/00, B65D 1/42, B65D 23/10

(54) **Blow molded plastic container including handgrip**
Blasgeformter Kunststoffbehälter mit Handgriff
Récipient en matière plastique moulé par soufflage comprenant une poignée

(30) Priority: 29.04.1993 US 55663; 17.06.1993 US 77271
(43) Date of publication of application: 02.11.1994
(73) Proprietor: PepsiCo, Inc., Purchase, New York 10577 (US)
(72) Inventor: Valyi, Emery I., Katonah, New York 10536 (US)
(74) Representative: LOUIS, PÖHLAU, LOHRENTZ & SEGETH

(56) References cited:
- EP-A- 0 225 155
- EP-A- 0 531 536
- WO-A-90/05674
- WO-A-90/08068
- FR-A- 1 063 387
- US-A- 4 993 565

## Description

The invention relates to a blow molded plastic container according to the preamble of claim 1.

Such a container is known from US-A-4,993,565. In this container the depressions forming a handgrip are reinforced against inward buckling by integral grooves and/or ribs.

The object of the present invention has to be seen in the provision of an alternative way of reinforcing the depressions in order to prevent the depressions from buckling outwardly when the container is pressurized.

This object is solved by the features in the characterizing clause of claim 1.

According to WO-A-90/05674 blow molded plastic containers are known which are polygonal in cross section and which are provided with a spider extending substantially the whole length within the bottle from its neck portion over the shoulder and body portions to its bottom portion so that the plastic bottle can be formed with shapes that are polygonal in section for packaging purposes. These bottles do not have depressions in the body portion which form a handgrip.

Further advantages features of the bottle according to the invention are stated in the subclaims.

After all, the container of the present invention provides numerous advantages. Firstly, a blow molded plastic container is provided with a supporting member inside the container providing support therefor. Supported handgrips may readily be obtained, and a bottom portion may be provided with internal supporting members providing support for an axially, inwardly directed bottom part. Further, these containers are conveniently and readily prepared.

Further advantages of the present invention will appear hereinbelow.

### BRIEF DESCRIPTION OF THE DRAWINGS

The foregoing will be more readily apparent when considered in connection with the following illustrative drawings wherein:
Figure 1 is a side-sectional view of a preform for preparing a container of the present invention;
Figure 1A is a sectional view taken along lines 1A-1A of Figure 1;
Figure 2A is a partial perspective view of a core for forming the preform of Figure 1;
Figure 2B is a sectional view of a core-injection mold assembly for forming the preform of Figure 1;
Figure 3 is an elevational view of a container of the present invention;
Figure 4 is a partial sectional view taken through a blow mold for forming a container of the present invention from a preform similar to the preform of Figure 1;
Figure 5A is a cross-sectional view taken along lines 5A-5A of Figure 3;
Figure 5B is a variation of the embodiment of Figure 5A;
Figure 5C is a cross-sectional view taken along lines 5C-5C of Figure 3;
Figure 6 is an alternate embodiment similar to Figure 3;
Figure 7 is a side-sectional view of the bottom portion of a container of the present invention including an axially, inwardly directed bottom portion with a support member therefor;
Figure 8 is a perspective view of an embodiment of a supported bottom portion of a container of the present invention;
Figure 9 is a sectional view of the bottom portion of Figure 8; and
Figure 10 is a partial perspective view of a preform core for forming a preform suitable to prepare the container structure shown in Figure 8.

### DETAILED DESCRIPTION OF PREFERRED EMBODIMENTS

In accordance with the present invention, the external configuration of the container of the present invention may be made to exhibit depressions and lobes between the depressions which may serve to facilitate gripping the bottle. This is particularly desirable for a bottle or container with a large circumference and makes the container easy to handle when full or partially full. Internal supporting members are provided adjacent the depressions to support same against internal pressure to provide a firm handgrip portion.

In addition, a further feature of the present invention is to provide a base or bottom portion with an axially, inwardly directed part, as a generally conical part, and at least one supporting member inside the container supporting the bottom part against deformation due to internal pressure. This is particularly useful since it is highly desirable to strengthen such an inwardly directed part or champagne base type structure.

Further, the internal supporting wall or walls of the present invention are particularly desirable in blow molded plastic containers in order to provide a supported wall structure.

The preform for forming these containers may be prepared by injection molding or extrusion molding techniques and includes an internal wall extending completely across the inside of the preform which will correspond generally to the internal supporting member in the final blow molded container.

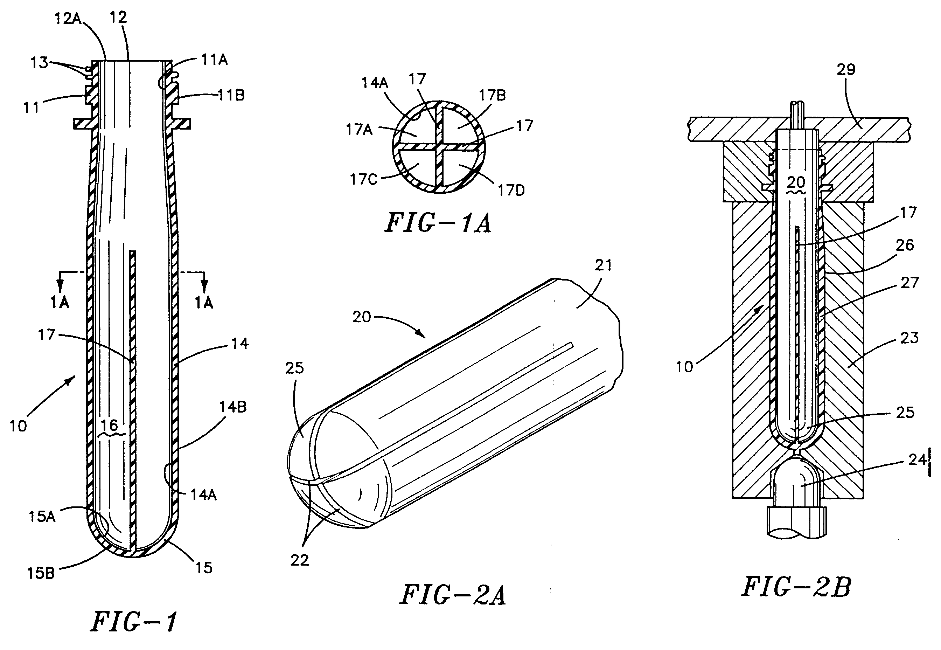

Referring to Figure 1, a plastic parison or preform 10 is formed by injection molding or extrusion molding from a synthetic resin which desirably can be biaxially oriented as for example polyethylene terephthalate. The preform 10 has a neck portion 11 defining an opening 12 and it may be provided with external threads 13 to serve as the site for attachment of a cap or closure means on the finished, blow molded plastic container. The preform 10 has a body portion 14 depending from the neck portion 11 and an integral bottom portion 15 depending from the body portion. The body portion in Figure 1 is generally tubular, although one can of course deviate from a tubular structure. Neck portion 11 has an inside wall face 11A and an outside wall face 11B, tubular body portion 14 has an inside wall face 14A and an outside wall face 14B, and bottom portion 15 has an inside wall face 15A and an outside wall face 15B. Body portion 14 defines hollow space 16 within preform 10, wherein the hollow space 16 is closed at the bottom portion 15 and open at neck opening 12. Bottom portion 15 may have any desired or convenient shape depending upon desired processing and final container characteristics, such as for example the rounded semi-circular shape shown in Figure 1, or for example a flat or even slightly inwardly directed bottom shape.

Preform 10 includes at least one and preferably two internal walls 17, such as the two walls shown in Figure 1A. The internal walls 17 extend completely across hollow space 16 and from the bottom portion 15, into tubular body portion 14 ending in body portion 14. As shown in Figure 1A, four separate chambers 17A, 17B, 17C and 17D are formed by internal walls 17, although of course the chambers communicate with each other above wall 17. As can be clearly seen in Figure 1A, the internal walls 17 are integral with inside wall face 14A. They are also integral with inside wall face 15A as can be seen from Figure 1. Thus, the internal wall or walls provide an integral supporting structure for the preform walls. Also, the preform may be made of transparent PET so that the internal walls are readily visible.

A convenient method of forming preform 10 by injection molding is shown in Figures 2A and 2B. This represents a preferred method of forming preform 10; however, it should be understood that preform 10 may be formed by extrusion molding, if desired, using conventional extrusion molding techniques with an extrusion head including an opening cross member to form the desired internal walls, followed by pinching off the bottom to form the bottom portion.

Referring to Figure 2A, injection molding core 20 is provided having external wall 21 in a generally cylindrical shape corresponding to the desired internal shape of preform 10. In addition, injection core 20 includes communicating hollow cross channels or slots 22 corresponding to the desired internal partition walls in the preform. Thus, core 20 is placed in injection mold 23 in the conventional manner with injection head 24 seated in injection mold 23 adjacent the bottom 25 of injection core 20. Core 20 is seated in injection mold 23 so that a space 26 appears between core 20 and injection mold 23 and molten plastic 27 is injected into space 26 via injection head 24. Molten plastic 27 will also travel into slots 22 in the core 20 to form the internal walls 17. The injection mold and core assembly is then opened, and the injection core with preform 10 thereon removed via platen 29. The injection core 20 is then removed from preform 10 as by holding the preform fixed while the core is moved in an axial direction.

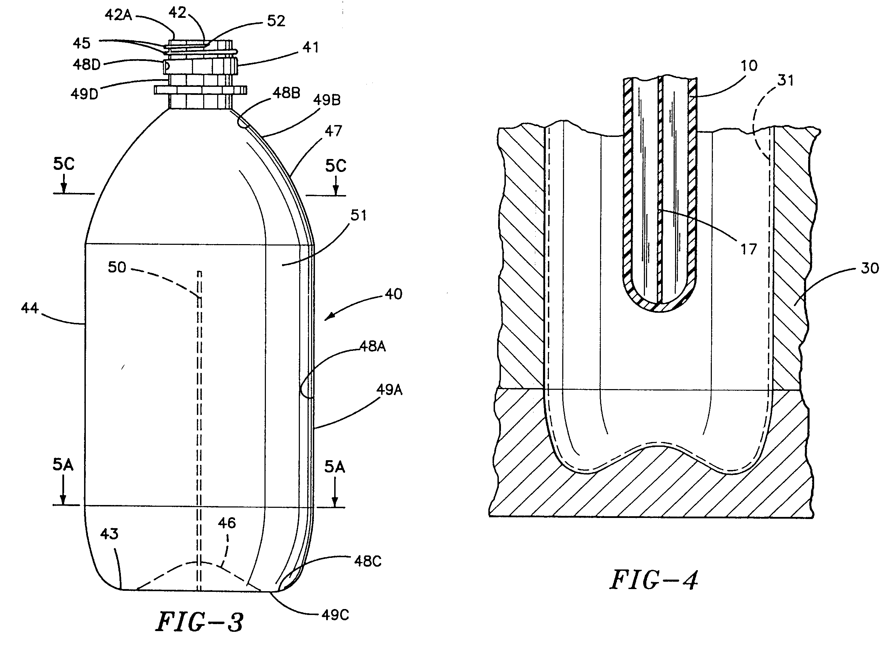

The warm preform 10 is then placed in a blow mold 30 as shown in Figure 4 and the container of the present invention formed therefrom as will be described hereinbelow.

The thus formed preform is brought to a temperature at which blow molding can be accomplished which may be done by heating a previously formed preform or forming the hot preform in line with the injection molding operation and suitably adjusting the temperature thereof, if necessary. Heating the internal walls, if necessary, may be done by circulating warm air inside the hollow space 16 or by inserting heaters inside at least one of the compartments formed by walls 17.

The warm preform is placed in a blow mold having the configuration of the desired container, as blow mold 30 in Figure 4, while blowing compressed air thereinto so that the preform expands into shape 31 shown in dashed lines in Figure 4, to effect biaxial orientation and axial elongation. This procedure may be carried out with or without a stretch rod or mandrel to effect axial extension. If such a rod is used, it should have as many prongs as there are compartments, with each bearing against the preform bottom within each compartment. The walls 17 will also expand to the extent permitted by blow mold 30. The particular blow mold shown in Figure 4 has an internal configuration which allows the formation of a plastic container 40 shown in Figure 3, although naturally other configurations may be selected. Naturally, if the desired final configuration includes at least two adjoining lobes connected together by depressions, the blow mold will have this configuration. Similarly, if an axially, inwardly directed bottom part is desired (as shown in Figures 3 and 4) the blow mold will have this configuration. The preform will expand into the shape permitted by the blow mold, and the internal walls will also expand correspondingly.

Thus, blow molded, plastic container 40 is formed having a neck portion 41 defining an opening 42, a bottom portion 43, a body portion 44 as a generally tubular body portion interconnecting the neck portion 41 and the bottom portion 43. Neck portion 41 is provided with external threads 45 corresponding to threads 13 on preform 10 to serve as the site for attachment of a closure on the container. Bottom portion 43 has an axially, inwardly directed generally conical base 46. Container 40 also includes shoulder portion 47 connecting neck portion 41 and tubular body portion 44, and also has body portion inside wall face 48A and outside wall face 49A, shoulder portion inside wall face 48B and outside wall face 49B, bottom portion inside wall face 48C and outside wall face 49C and neck portion inside wall face 48D and outside wall face 49D.

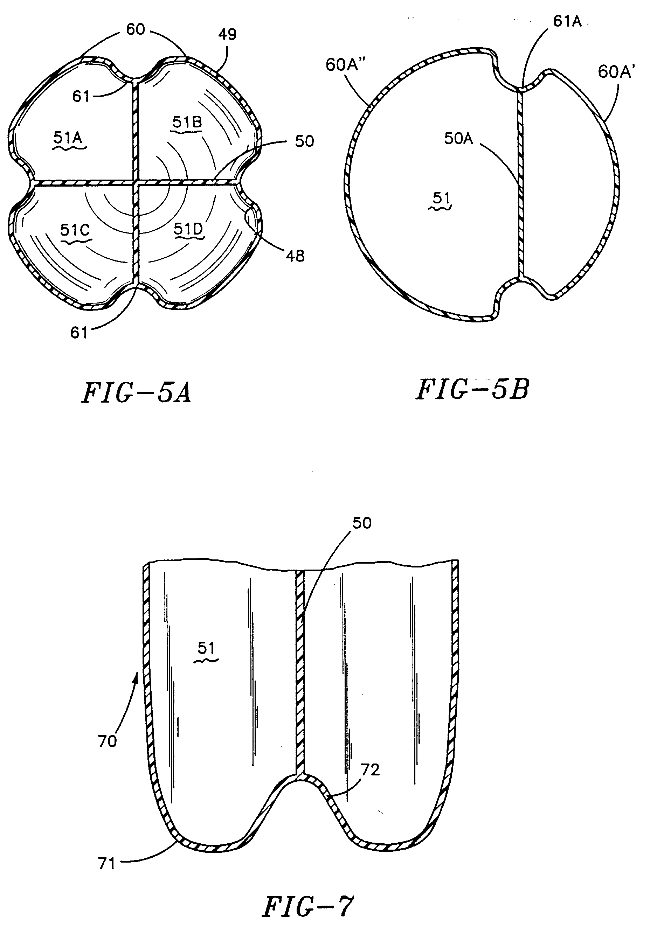

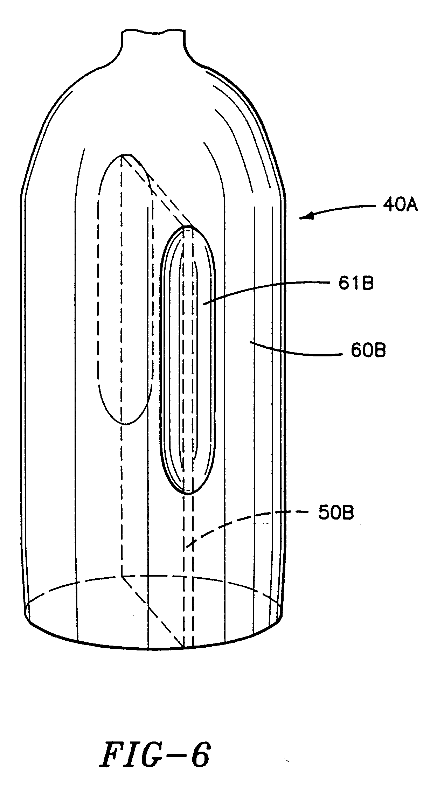

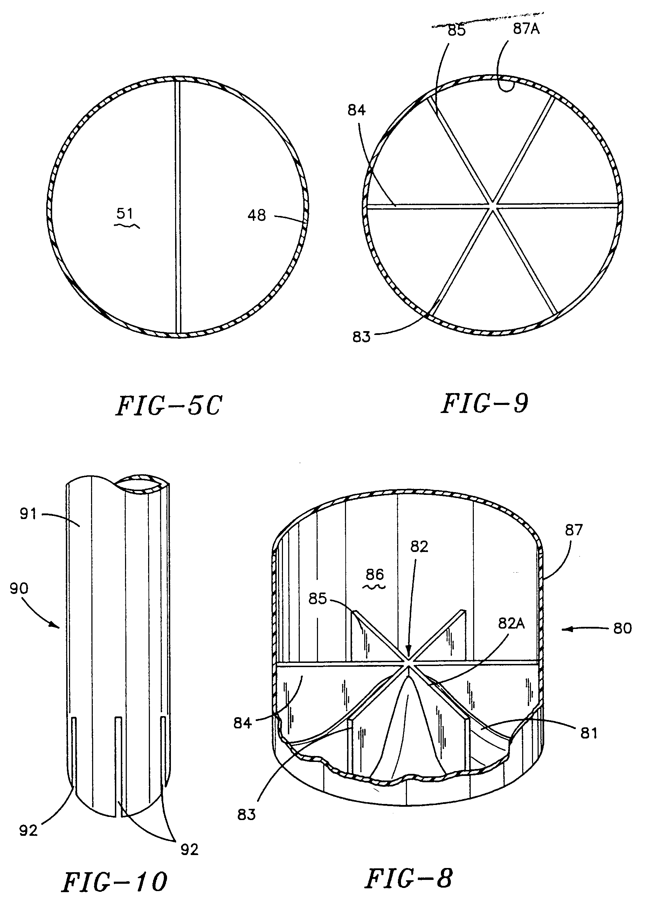

Container 40 is provided with at least one internal wall 50 which corresponds to the internal wall 17 of preform 10 and which extends completely across hollow space 51 within container 40 and from the bottom portion 43 to the body portion 44, ending in the body portion, to form at least two separate chambers, see chambers 51A, 51B, 51C and 51D in Figure 5 communicating with each other in the body portion at the termination of internal wall 50.

As can be readily seen from Figures 3 and 5, the internal walls are integral with the container, see Figure 5 which clearly shows internal wall 50 integral with inside wall face 48 and providing a firm support for the container walls. Naturally also the supporting wall or walls are integral with the bottom portion inside wall face 48C and provide a firm support therefor.

Referring to Figure 5, outside wall face 49 defines adjoining arcuate lobes 60 connected together by depressed regions or depressions 61, particularly suitable for a handgrip in a large sized container. Naturally, alternate shapes can be provided. Supporting members 50 in hollow space 51 are situated adjacent the depressions and provide support therefor. The supported handgrips thus provided will not evert as the bottle is pressurized.

The embodiment of Figure 5B shows a single supporting wall 50A with lobe 60A' being smaller than lobe 60A'', said lobes being joined together by depressions 61A, and with the supporting wall crossing hollow space 51 spaced from the center thereof. This construction provides a relatively small, easy to handle lobe.

In contrast, the embodiment of Figure 5A shows lobes 60 of approximately equal size and with supporting wall 50 crossing the center of hollow space 51. As can be appreciated, one can use a single supporting wall as shown in Figure 5B, or two supporting walls as shown in Figure 5A, or more than two supporting walls if desired. Advantageously, the supporting walls are integral with the inside wall faces of the bottom portion and at least a part of the body portion depending on the upward extent of the supporting wall. They are adjacent the depressions and provide a firm support for same which will for example prevent eversion of the walls. Therefore, the handgrip will remain firm and stable whether the container is full or partly full. As can be seen from Figures 3 and 5C, the internal wall desirably ends within the body portion. Similarly, the lobes and depressions which for the handgrip may end in the body portion and indeed may, if desired start and end in the body portion to a discrete handgrip. This is shown in a representative embodiment of Figure 6 wherein container 40A has discrete handgrips formed by depressions 61B and lobes 60B. Supporting member 50B is provided adjacent and supporting the depressions as in the other embodiments. Of course, if desired, the handgrip may extend all the way to the bottom portion or may extend well into the shoulder portion. This provides considerable versatility to the container of the present invention.

If desired, the lobes and depressions can simply form undulations or other decorative patterns in the outside wall face for the purpose of distinguishing the container, in a manner after Figures 5A and 6. Accordingly, in accordance with the present invention, there may readily be a plurality of narrow lobes for decorative purposes.

Figure 7 shows container 70 with a modified champagne base 71 including an axially, inwardly directed generally conical part 72. Supporting member 50 in hollow space 51 is situated adjacent conical part 72 and supports the conical part, which may be in addition to serving as a supporting member as in the other embodiments. As shown in Figure 7, supporting member 50 is integral with and connected to conical part 72, extending to the body portion of the container as in Figure 3.

The embodiment of Figure 8 shows container 80 with a modified champagne base 81 including an axially, inwardly directed conical part 82. A plurality of internal walls or supporting members 83, 84 and 85 are situated in hollow space 86 supporting conical member 82 and side walls 87 as well as base 81. As can be clearly seen in Figures 8 and 9, the supporting members are integral with a part of the body portion inside wall face 87A and with the inwardly directed part inside wall face 82A to provide a firm and rigid support for the inwardly directed part and the adjacent and integral walls. The supporting walls may terminate in the body portion as with other embodiments. The exact number of supporting walls will depend on the particular container.

Figure 10 shows a partial perspective view of a suitable core 90 for forming a preform suitable to make the container of Figures 8 and 9. Core 90 has an external wall 91 in a generally cylindrical shape similar to the core in Figure 2A. Communicating hollow cross channels or slots 92 correspond to the number and height of supporting walls desired in the final container. In a manner after Figures 2A and 2B, molten plastic will travel into slots 92 to form the internal walls.

## Claims

1. A blow molded plastic container including a handgrip comprising:
a neck portion (41) defining an opening (42), a bottom portion (43), a body portion (44) and a shoulder portion (47), interconnecting said neck and body portions;
wherein said neck, body, shoulder and bottom portions define a hollow space (51) closed at the bottom portion (43) and open at the neck portion (41);
wherein the body portion outside wall face (49A) defines regions that comprise at least two molded depressions dividing said body portion (44) into at least two adjoining molded lobes (60), with the depressions and lobes being limited in extent to the body portion (44) only and forming a handgrip,
**characterized in**
that said depressions (61) are interconnected and supported by a supporting member (50) to prevent outward bulging of the depressions, wherein said supporting member (50) extends completely across the hollow space (51) and is integral with the inside wall face (48A) of the body portion (44).

2. A container according to claim 1 wherein the supporting member (50) extends from the bottom portion (43) to the body portion (44) and is integral with both the bottom and body portions.

3. A container according to claim 1 or 2 including four of said adjoining lobes (68), and four of said depressions (61), and two of said supporting members (50) comprising internal supporting walls extending completely across said hollow space (51), with each supporting wall interconnecting two of said depressions (61).

4. A container according to claim 3 wherein said lobes (60) are of approximately the same size and wherein said supporting member (50) approximately crosses the center of said hollow space (51).

5. A container according to claim 1 wherein said lobes (60A', 60A'') are of unequal size and wherein said supporting member (50A) crosses the hollow space (51) spaced from the center thereof.

6. A container according to claim 2 wherein the bottom portion includes an axially, inwardly directed part (72) having an inside wall face, and wherein said supporting member (50) is integral with at least part of the body portion (44) inside wall face and is also integral with the inwardly directed part inside wall face, to support said integral inside wall faces.

7. A container according to claim 6 including a plurality of said supporting members (83, 84, 85).

8. A container according to one of the preceding claims wherein said container is expanded from a preform (10) in a blow mold (30) and said supporting member (50) is expanded to the extent permitted by the blow mold.

## Patentansprüche

1. Blasgeformter Kunststoffbehälter mit Handgriff, wobei ein Halsabschnitt (41) mit einer Öffnung (42), ein Bodenabschnitt (43), ein Körperabschnitt (44) und ein den Halsabschnitt mit dem Körperabschnitt verbindender Schulterabschnitt (47) vorgesehen sind, die einen am Bodenabschnitt verschlossenen und am Halsabschnitt offenen Hohlraum (51) bestimmen, wobei ferner die Außenwandfläche (49A) des Körperabschnitts Bereiche aufweist, die mindestens zwei Einsenkungen zur Unterteilung des Körperabschnittes (44) in mindestens zwei angrenzende Auswölbungen (60) umfassen, und wobei die Einsenkungen und Auswölbungen ausschließlich auf die Ausdehnung des Körperabschnittes beschränkt sind und einen Handgriff bilden,
**dadurch gekennzeichnet,**
daß die Einsenkungen (61) mit einem Stützelement (50) verbunden und abgestützt sind, um eine Ausbauchung der Einsenkungen nach außen zu verhindern, wobei sich das Stützelement (50) vollständig über den Hohlraum (51) erstreckt und einstückig mit der Innenwandfläche (48A) des Körperabschnittes (44) verbunden ist.

2. Kunststoffbehälter nach Anspruch 1, wobei das Stützelement (50) sich vom Bodenabschnitt (43) zum Körperabschnitt (44) erstreckt und einstückig sowohl mit dem Bodenabschnitt als auch mit dem Körperabschnitt ausgebildet ist.

3. Kunststoffbehälter nach Anspruch 1 oder 2, wobei vier von den angrenzenden Auswölbungen (68) vorgesehen sind sowie vier von den Einsenkungen (61) und zwei von den Stützelementen (50), die sich quer über den Hohlraum (51) erstreckende innere Stützwände bilden, wobei jede Stützwand zwei der Einsenkungen (61) miteinander verbindet.

4. Kunststoffbehälter nach Anspruch 3, wobei die Auswölbungen (60) in etwa von der gleichen Größe sind und das Stützelement (50) in etwa durch das Zentrum des Hohlraums (51) verläuft.

5. Kunststoffbehälter nach Anspruch 1, wobei die Auswölbungen (60A', 60A'') von ungleicher Größe sind und wobei das Stützelement (50A) vom Zentrum des Hohlraumes (51) beabstandet ist.

6. Kunststoffbehälter nach Anspruch 2, wobei der Bodenabschnitt einen in axialer Richtung nach innen gerichteten Teil (72) mit einer Innenwandfläche umfasst und wobei das Stützelement (50) mindestens mit einem Teil der Innenwandfläche des Körperabschnittes (44) einstückig verbunden ist und außerdem einstückig mit dem nach innen gerichteten Teil der Innenwandfläche verbunden ist, um die als ein Stück vorliegenden Innenwandflächen abzustützen.

7. Kunststoffbehälter nach Anspruch 6, wobei eine Vielzahl von Stützelementen (83, 84, 85) vorgesehen ist.

8. Kunststoffbehälter nach einem der vorhergehenden Ansprüche, wobei der Behälter aus einer Vorform (10) in einer Blasform (30) aufgebläht ist und das Stützelement bis zu dem von der Blasform zugelassenen Ausmaß expandiert ist.

## Revendications

1. Un récipient en matière plastique moulé par soufflage et comprenant une poignée, du type se composant d'un col (41) délimitant une ouverture (42), un fond (43), un corps (44) et un épaulement (47) reliant ce col et ce corps, dans lequel ce col, ce corps, cet épaulement et ce fond délimitent un espace creux (51), fermé par le fond (43) et s'ouvrant par le col (41) et dans lequel la face extérieure (49A) de la paroi du corps délimite des régions qui comprennent au moins de dépressions divisant ce corps (44) en au moins deux lobes moulés adjacents (60), le développement de ces dépressions et de ces lobes n'étant limité qu'au corps (44) en formant une poignée, **caractérisé en ce que** lesdites dépressions (61) communiquent entre elles et sont supportées par un élément de support (50) ayant pour but d'empêcher lesdites dépressions de se gonfler vers l'extérieur, ledit élément de support (50) traversant complètement l'espace creux (51) et étant en une seule pièce avec la face intérieure (48A) du corps (44).

2. Un récipient selon la revendication 1, dans lequel l'élément de support (50) s'étend depuis le fond (43) jusqu'au corps (44) et est en une seule pièce avec à la fois le fond et le corps.

3. Un récipient selon la revendication 1 ou 2, comprenant quatre tels lobes adjacents (68) et quatre telles dépressions (61), ainsi que deux tels éléments de support (50) constituant des cloisons de support internes traversant complètement l'espace creux (51), chacune de ces cloisons de support reliant entre elles deux desdites dépressions.

4. Un récipient selon la revendication 3, dans lequel lesdits lobes (60) ont approximativement les mêmes dimensions et dans lequel l'élément de support (50) traverse l'espace creux (51) approximativement en son centre.

5. Un récipient selon la revendication 1, dans lequel lesdits lobes (60A', 60A'') sont de dimensions inégales et dans lequel l'élément de support (50A) traverse l'espace creux (51) en étant espacé de son centre.

6. Un récipient selon la revendication 2, dans lequel le fond comporte une portion dirigée axialement vers l'intérieur (72), présentant une face intérieure de paroi, et dans lequel l'élément de support (50) est en une seule pièce avec au moins une partie de la face intérieure de paroi du corps (44), et est également en une seule pièce avec cette face intérieure de paroi de la portion dirigée vers l'intérieur, de manière à supporter lesdites faces intérieures de paroi en une seule pièce.

7. Un récipient selon la revendication 6, comprenant plusieurs tels éléments de support (83, 84, 85).

8. Un récipient selon l'une des revendications précédentes, dans lequel ledit récipient est dilaté à partir d'une préforme (10) dans un moule de soufflage (30) et l'élément de support (50) est dilaté jusqu'au degré permis par le moule de soufflage.
